Europäisches Patentamt

European Patent Office

Office européen des brevets

(11) Publication number: **0 181 380**
**B1**

(12) **EUROPEAN PATENT SPECIFICATION**

(45) Date of publication of patent specification: **25.07.90**

(21) Application number: **85902402.8**

(22) Date of filing: **06.05.85**

(86) International application number:
**PCT/US85/00836**

(87) International publication number:
**WO 85/05116 21.11.85 Gazette 85/25**

(51) Int. Cl.⁵: **C 08 L 53/02,** C 09 J 125/08,
C 09 J 125/16

(54) PRESSURE SENSITIVE ADHESIVES CONTAINING BLOCK COPOLYMER.

(30) Priority: **09.05.84 US 608626**
**22.01.85 US 693391**

(43) Date of publication of application:
**21.05.86 Bulletin 86/21**

(45) Publication of the grant of the patent:
**25.07.90 Bulletin 90/30**

(84) Designated Contracting States:
**BE DE FR GB IT NL SE**

(56) References cited:
**DE-A-2 348 923**
**DE-A-2 736 952**
**US-A-4 131 709**
**US-A-4 325 770**
**US-A-4 427 837**
**US-A-4 444 953**

(73) Proprietor: **THE DOW CHEMICAL COMPANY**
**2030 Dow Center Abbott Road P.O. Box 1967**
**Midland Michigan 48640-1967 (US)**

(72) Inventor: **TANG, Raymond, W.**
**8110 Sunny Ridge**
**Houston, TX 77095 (US)**
Inventor: **TUNG, Lu, Ho**
**401 Hunters Ridge**
**Midland, MI 48640 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

## Description

A wide variety of pressure sensitive adhesive compositions have been available for many years. One particularly useful variety of such pressure sensitive adhesive compositions are those compositions which contain block copolymer. Such block copolymers generally are of the ABA configuration wherein the A blocks are of a polymer of relatively rigid material and the B blocks are of a polymer of a diene such as butadiene or isoprene. Such block copolymers are well known and are set forth in the following US—A—(s): US—A—3,239,478; US—A—3,592,710; US—A—3,635,861; US—A—3,676,202; US—A—3,723,170; US—A—3,935,338; US—A—4,131,709; US—A—4,136,137; US—A—4,178,275; US—A—4,325,770 and DE—A—2348923 and DE—A—2736952.

DE—A—23 48 923 describes the utilization of a copolymer of styrene and alpha-methylstyrene in combination with a rubbery midblock having an improved thermal resistance in comparison with ABA block copolymers wherein the endblocks are styrene units. This reference does not contain any suggestion to use such a copolymer as a component of a pressure-sensitive adhesive composition, there is only mentioned that the copolymers are useful in various thermoplastic elastomers or resins with thermal resistance.

US—A—4,325,770 refers to pressure-sensitive adhesives comprising a thermoplastic A block resin as styrene or styrene homologs and analogs. The preferred ABA polymer is Kraton® which has a low viscosity at elevated temperature.

In US—A—4,131,709 there is described that prior art triblock polymers have relatively low thermal strength and in some cases very short periods of tackiness. The disadvantages have been avoided by adding resins that increase the cohesion including a mixture of alkylphenol resin. The use of a resin tackifier is also mentioned. Nowhere in said reference is any suggestion that a copolymer formulation for the polymer A block might alleviate low thermal strength.

Pressure sensitive adhesive compositions employing triblock polymers often are found lacking in their ability to withstand heat and such adhesives have a marked tendency to creep.

It would be desirable if there were available an improved pressure sensitive adhesive formulation having a greater resistance to heat and having a greater resistance to creep while providing desired adhesion. These benefits of the present invention are achieved by a pressure-sensitive adhesive composition comprising a block copolymer of ABA configuration wherein the A block is derived from a monoalkenyl aromatic hydrocarbon, and the B block is derived from a conjugated diene and a tackifying resin, characterized by

(a) a block copolymer of ABA configuration wherein the A block is a copolymer of alpha-methylstyrene and styrene and the alpha-methylstyrene to styrene weight ratio is from 2:98 to 98:2 and the B block of the polymer is a diene polymer and the weight ratio of the A block to the B block in the ABA block copolymer is from 10:90 to 45:55; and

(b) a tackifying resin compatible with block B, in the amount of 10 to 200 parts per hundred parts of the ABA block copolymer.

Triblock copolymers useful in the practice of the present invention are described in US—A—4,427,837 and EP—A—135,168.

ABA block copolymers used with the practice of the present invention require that the A block have an alpha-methylstyrene to styrene weight ratio of from 2:98 to 98:2; and the preferred range is 1.1:1 to 2.5:1. The B block of the block copolymers is preferably polyisoprene, polybutadiene or isoprene-butadiene copolymer. The ratio of the A block to the B block is from 10:90 to 45:55 with a preferred range of 15:85 and 30:70.

The triblock copolymers of the following examples and the method of their preparation are described in US—A—4,427,837. In the preparation of the triblock copolymers, conventional anionic polymerization techniques were employed. Air and moisture were excluded from the reaction vessels and monomers were purified by passing them through alimina columns or by distilling them under nitrogen or vacuum in the presence of a drying agent. The difunctional organolithium initiator employed is described in US—A—4,196,154 and US—A—4,172,190.

The initiator was prepared in toluene solution by reacting secondary butyllithium with 1,3-bis(1-phenyl-ethenyl)benzene in a mole ratio of 2 to 1 at room temperature for a period of 45 to 60 minutes. The concentration of the initiator solutions used in the experiments range from 0.05 normal to 0.02 normal.

Many low molecular weight resins may be employed as tackifiers such as: rosin ester types as are commercially available under the trade designation of Floral® 85; polyterpene such as is commercially available under the name Wingtac® 95; polyolefin resins, such as Super Sta-Tac 80®; polydipentenes such as Zonarez® 7085; polypinenes such as Zonarez® 5. Stabilizers are generally of the hindered phenol type and are well known and common in the art.

The pressure sensitive adhesive compositions of the present invention can contain up to 5 parts per hundred parts by weight of the ABA block copolymer of such materials as antioxidants and stabilizers. These include stabilizers for protection of both the diene center blocks and the non-elastomeric terminal blocks. Combinations of stabilizers are often more effective, due to the different mechanisms of degradation to which each of these types of blocks is subject. Certain hindered phenols, organo-metallic compounds, aromatic amines and sulfur compounds are useful for this purpose. Especially effective types of these materials include the following:

2

(1) Benzothiazoles, such as 2-(dialkyl-hydroxybenzylthio)benzothiazoles,

(2) Esters of hydroxybenzyl alcohols, such as benzoates, phthalates, stearates, adipates or acrylates of 3,5-dialkyl-4-hydroxybenzyl alcohols,

(3) Stannous phenyl catecholates,

(4) Zinc dialkyl dithiocarbamates,

(5) Alkyl phenols, e.g., 2,6-di-tert-butyl-4-methyl phenol.

The tackifying resins employed together with the subject copolymers and tackifying resin are represented by the following:

Rosin

Dehydrogenated rosin

Rosin + polyterpene resins, e.g., polymerized betapinene (from 100% rosin to 100% resin)

Glycerol esters of hydrogenated rosin

Pentaerythritol esters of hydrogenated rosin

Coumarone-indene resins

Hydrogenated rosin

Glycerol esters of polymerized rosin

Maleic anhydride-modified rosin and rosin derivatives

Partial esters of styrene-maleic acid copolymers

Chlorinated biphenyls (S.P. 44—160°C (113—320°F))

Oil-soluble phenol-aldehyde resin

The diblock copolymers of the AB type which can optionally be included in the present pressure sensitive adhesive compositions are well known to those skilled in the art, as are processes for preparation of such diblock copolymers. These can be added in amounts up to 50 parts by weight per hundred parts of the ABA triblock copolymer. If desired, sometimes unintentionally, the optional diblock copolymer can be prepared in these amounts in the polymerization reaction that prepares the ABA triblock copolymer.

An extending oil can be used in the pressure sensitive adhesive in amounts up 50 parts by weight per hundred parts of the ABA block copolymer. The extender oils employed together with the tackifying resins and block copolymers have the chief advantage of substantially reducing the cost of the composition while improving tack and flexibility without any material degradation in other properties thereof. The oils must be chosen with care to coordinate with the block copolymer relative to the compatability with the several polymer blocks present therein. The oil should be one which is substantially compatible with homopolymers of conjugated dienes but which is substantially incompatible with homopolymers of the non-elastic (thermoplastic) terminal blocks. Compatibility can be determined by the following type of test.

An oil to be tested is mixed in several proportions, e.g., 5, 25, 50 parts oil per hundred parts ABA polymer resin (phr.) with the type of block copolymer of interest in a volatile mutual solvent, for example, toluene. A thin film is cast by spreading the solution evenly on a glass surface and allowing the solvent, toluene, to evaporate over a period of 16—24 hours at ambient temperature. Suitability of the oil for use as an extender is judged by the tensile strengths of the oil-containing polymer films determined by an appropriate testing instrument and by the appearance of the film surface. Excessive compatibility with the terminal polymer segments will cause severe loss of tensile strength, greater than that resulting from simple dilution of the polymer. Excessive incompatibility will be evidenced by diffusion of the oil to the film surface.

It is sometimes desirable to use a reinforcing resin in the present pressure sensitive adhesive compositions, which reinforcing resins have a higher softening point than the block A in the ABA polymer. Reinforcing resins suitable for the practice of the present invention are thermoplastic resins preferably having a glass transition temperature at least about 10° centigrade above the glass transition temperature of the A block of the ABA block copolymer. Typical of resins useful for reinforcement are poly(alphamethyl styrene), poly (2,6-dimethyl phenylene oxide) resins and a coumarone-indene resin, an example of which is commercially available under the trade designation Cumar® LX—509. Such resins are used in amounts up to 100 parts by weight per hundred parts of the ABA block copolymer, preferably from 2 to 100 parts.

The compositions of the present invention can be designed for a wide variety of uses and applications. They may be applied, for example, to paper, paper boards, wood, metal foils, polyolefin films, polyvinyl chloride films, cellophane, felts, woven fabrics, non-woven fabrics and glass and for bonding two or more of such materials together. The adhesives are useful in pressure sensitive tapes such as masking tapes, adhesive sheets, primers for other adhesives, adhesive tapes, mending tapes, electrical insulation tape, laminates, hot-melt adhesives, mastics, cements, caulking compounds, binders, sealants, pressure sensitive adhesives otherwise, delayed tack adhesives, adhesive latices, shoe sole adhesives, cloth backings, carpet backings and cements.

Pressure sensitive adhesives of the present invention can be applied to substrates as a hot melt, for example, by extrusion from a sheeting die or slot die. Alternatively the compositions can be deposited from a solution such as 15 weight percent solution in 9:1 by volume toluene-methanol solvent. The invention is further illustrated but not limited by the following experiments.

The initiator solution used in the following experiments was prepared in toluene solution by reacting secondary butyl lithium with 1,3-bis(1-phenzlethenyl) benzene in a mole ratio of 2 to 1 at room temperature

3

for a period of 45 to 60 minutes. The concentration of the initiator solutions used in the experiments range from 0.05 normal to 0.02 normal.

Experiment 1.

A 2-liter reactor was charged with 1,225.8 grams of alpha-methylstyrene. A sec-butyllithium solution was slowly added to the alpha-methylstyrene until a faint straw color appeared titrating the impurities in the alpha-methylstyrene. When the titration was complete, 177.4 grams of isoprene and 12 grams of styrene were added to the reactor. The reaction mixture was heated to 45 degrees centigrade whereupon 1.53 millimoles of the above-described difunctional initiator were added. The reaction mixture was heated to 50 degrees centigrade whereupon the heat of polymerization raised the temperature of the reactants to about 75 degrees centigrade in about 30 minutes. As the temperature of the reaction mixture started to return to 50 degrees, the color of the reaction mixture changed from a pale straw color to a brownish orange indicating that the polymerization of isoprene was complete and that the copolymerization of styrene and alpha-methylstyrene had begun. The temperature of the reaction mixture was maintained above 50 degrees centigrade for an additional 45 minute period and a mixture of ispropenol and toluene, 10 to 1 by volume, was added slowly to the reaction mixture until the color began to fade. The reaction mixture was then heated to a temperature of 70 degrees for an addition period of 15 minutes and cooled to room temperature. About 130 grams of the reaction mixture was removed for analysis. To the remainder of the reaction mixture 154.7 grams of isoprene, 10.5 grams of styrene were added. The mixture was then heated to 45 degrees centigrade and 1.33 millimoles of the difunctional initiator solution was added. The second polymerization was permitted to proceed similarly for about 2 hours. The reaction mixture was terminated by the addition of 2 milliliters of isopropanol. A hindered phenol stabilizer in an amount of 3.7 grams was added and the excess alpha-methylstyrene monomer was removed by heating in a vacuum oven. The total yield was 333 grams. The polymer was an ABA triblock with polyisoprene as the center block and alpha-methylstyrene-styrene copolymer as the end blocks. The composition as determined by proton nuclear magnetic resonance was 81 weight percent isoprene, 12.7 weight percent alpha-methylstyrene and 6.3 weight percent styrene. The molecular weight of the polymer as determined by gel permeation chromatography was 176,000 molecular weight units.

The block copolymer was then mixed with an aliphatic hydrocarbon tackifying resin commercially designated as ESCOREZ® 1310 commercially available from the Exxon Chemical Company. Varying proportions were employed as set forth in Table I below. Included in the mixture was one part by weight per hundred parts by weight of resin of a solid hindered phenol stabilizer commercially available under the trade designation IRGANOX 1010® and available from Ciba-Geigy Corporation. Formulations were dissolved in toluene and applied to polyester film as toluene solutions; roughly equal parts of toluene and the adhesive formulation were used. Various physical properties were then determined. The peel strength shown in Table I is based on the Pressure Sensitive Tape Council (PSTC) test method PSTC—1. The rolling ball tack test was based on PSTC—6. The quick stick test employed was PSTC—5. The shear holding test was based on test method PSTC—7 and was conducted at 80.6°C (177 degrees Fahrenheit) with a 450 gram weight attached to the specimen; holding time in minutes is set forth in the Table.

TABLE I

Adhesive performance of compositions containing triblock prepared in Example 1

| ABA polymer Wt.% | 73.5 | 69.9 | 66.7 | 62.5 | 61.0 | 58.8 | 55.0 | 50.0 |
|---|---|---|---|---|---|---|---|---|
| Escorez® 1310 Wt.% | 26.5 | 30.1 | 33.3 | 37.5 | 39.0 | 41.2 | 45.0 | 50.0 |
| Rolling ball tack in cm | 4.0 | 5.0 | 4.5 | 4.5 | 5.0 | 4.5 | 12.0 | >26 |
| 180° Peel strength in kg/m(in lb/in) | 44.4 (2.49) | 41.1 (2.3) | 48.9 (2.74) | 46.4 (2.6) | 46.4 (2.6) | 53.9 (3.02) | 66.0 (3.7) | 75.5 (4.23) |
| Quick stick in kg/m(in lb/in) | 33.2 (1.86) | 23.9 (1.34) | 34.6 (1.94) | 30.9 (1.73) | 22.7 (1.27) | 26.1 (1.46) | 39.3 (2.2) | 48.9 (2.74) |
| Holding time in min | all >4100 | | | | | | | |

Wt. % = Weight percent
cm = centimeter
kg/m = kilograms per meter
lb/in = pounds per inch
min = minute

EP 0 181 380 B1

For purposes of comparison similar formulations were prepared utilizing a commercially available styrene isoprene triblock copolymer available under the trade designation Kraton 1107®. The commercially available block copolymer contained 86 percent by weight isoprene and 14 weight percent styrene polymerized therein. Molecular weight as determined by gel permeation chromatography was 169,000 molecular weight units. The results are set forth in Table II.

TABLE II

Adhesive performance of compositions containing a commercial styrene-isoprene triblock polymer
Kraton® 1107
comparative experiments — not examples of the present invention

| | | | | | | | | |
|---|---|---|---|---|---|---|---|---|
| ABA polymer Wt.% | 75 | 70 | 65 | 62 | 60 | 55 | 50 | 45 |
| Escorez 1310® Wt.% | 25 | 30 | 35 | 38 | 40 | 45 | 50 | 55 |
| Rolling ball tack in cm | 3.0 | 2.0 | 3.5 | 4.0 | 5.0 | 4.5 | 14.0 | 26.0 |
| 180° Peel strength in kg/m (in lb/in) | 43.4 (2.43) | 48.2 (2.7) | 50.0 (2.8) | 55.3 (3.1) | 53.6 (3.0) | 71.4 (4.0) | 85.7 (4.8) | 91.0 (5.1) |
| Quick stick in kg/m (in lb/in) | 20.5 (1.15) | 24.3 (1.36) | 26.2 (1.47) | 32.5 (1.82) | 31.8 (1.78) | 36.1 (2.02) | 38.0 (2.13) | 40.3 (2.26) |
| Holding time in min | 2978 | 2436 | 1633 | 1085 | 984 | 961 | 730 | 310 |

Wt.% = Weight percent
cm = centimeter
kg/m = kilograms per meter
lb/in - pounds per inch
min = minute

EP 0 181 380 B1

The 55/45 compositions of both Tables I and II were used to prepare each a 50 weight percent solution in toluene. A Brookfield viscometer rotating at 5 rpm at room temperature indicated the solution viscosity of the composition in accordance with the present invention to be 4.3 pascal seconds. The comparative example composition containing the commercial triblock polymer had a viscosity of 6.6 pascal seconds. The lower solution viscosity provides a material that is easier to apply. However, the holding time at higher temperature is considerably greater with compositions in accordance with the invention as exemplified by the tables.

A further series of pressure sensitive adhesive compositions were prepared from the ABA copolymer prepared in Experiment 1 and evaluated in the hereinbefore discussed manner. The test results are set forth in Table III. The tackifying resin used was an aliphatic hydrocarbon resin commercially available under the tradename Piccolyte® A115 from Hercules.

TABLE III

Adhesive performance of compositions containing triblock prepared in Example 1

| ABA polymer Wt.% | 73.5 | 69.9 | 66.7 | 62.5 | 61.0 | 58.5 | 55.0 |
|---|---|---|---|---|---|---|---|
| Piccolyte A115® Wt.% | 26.5 | 30.1 | 33.3 | 37.5 | 39.0 | 41.2 | 45.0 |
| Rolling ball tack in cm | 3.0 | 4.0 | 4.0 | 5.0 | 7.0 | 8.0 | 17.0 |
| 180° Peel strength in kg/m (in lb/in) | 53.6 (3.0) | 58.0 (3.25 | 56.6 (3.17) | 79.8 (4.47) | 80.3 (4.5) | 82.5 (4.62) | 107.1 (6.0) |
| Quick stick in kg/m (in lb/in) | 42.8 (2.4) | 44.6 (2.5) | 42.1 (2.36) | 51.8 (2.9) | 53.6 (3.0) | 51.8 (2.9) | 55.3 (3.1) |
| Holding time in min | | | | all >4100 | | | |

Wt.% = Weight percent
cm = centimeter
kg/m = kilograms per meter
lb/in = pounds per inch
min = minute

**EP 0 181 380 B1**

Experiment 2.

Another triblock copolymer composition was prepared by the method described in Experiment 1 with the exception that a slightly larger amount of initiator was used in each of the two polymerization steps. The resultant block copolymer had an identical composition as to the block copolymer prepared in Experiment 1; however, the molecular weight as measured by gel permeation chromatography was 155,000 molecular weight units.

Two series of experiments were conducted; one using Escorez® 1310 as the tackifier and the other using Piccolyte® A115 as the tackifier. The results are set forth in Tables IV and V.

10

TABLE IV

Adhesive performance of compositions containing triblock prepared in Example 2

| | | | | | | |
|---|---|---|---|---|---|---|
| ABA polymer Wt. % | 65 | 60 | 55 | 50 | 45 | 40 |
| Escorez® 1310 Wt.% | 35 | 40 | 45 | 50 | 55 | 60 |
| Rolling ball tack in cm | 3.0 | 2.0 | 3.0 | 6.0 | 8.0 | no tack |
| 180° Peel Strength in kg/m (in lb/in) | 59.4 (3.33) | 69.1 (3.87) | 82.6 (4.63) | 93.5 (5.24) | 109.2 (6.12) | – |
| Quick stick in kg/m (in lb/in) | 32.7 (1.83) | 36.4 (2.04) | 37.5 (2.10) | 39.3 (2.20) | 43.4 (2.43) | – |
| Holding time in min | all >4100 | | | | | |

Wt. % = weight percent
cm = centimeter
kg/m = kilograms per meter
lb/in = pound per inch
min = minute

EP 0 181 380 B1

TABLE V

Adhesive performance of compositions containing triblock

| ABA polymer Wt. % | 65 | 60 | 55 | 50 | 45 | 40 |
|---|---|---|---|---|---|---|
| Piccolyte® A115 Wt.% | 35 | 40 | 45 | 50 | 55 | 60 |
| Rolling ball tack in cm | 12.0 | 12.0 | 13.0 | >26 | no tack | no tack |
| 180° Peel strength in kg/m (in lb/in) | 73.1 (4.1) | 73.0 (4.09) | 80.0 (4.48) | 94.8 (5.31) | – | – |
| Quick stick in kg/m (in lb/in) | 35.9 (2.01) | 36.1 (2.02) | 38.9 (2.18) | 40.2 (2.25) | – | – |
| Holding time in min | all >4100 | | | | | |

Wt. % = Weight percent
cm = centimeter
kg/m = kilograms per meter
lb/in = pounds per inch
min = minute

EP 0 181 380 B1

Two compositions were prepared. One, Composition A contained 50 weight percent of the block copolymer prepared in Experiment 2 and 50 weight percent Escorez® 1310. The second, Composition B was 55 weight percent Kraton® 1107 and 45 weight percent Escorez® 1310 and was a comparative example, not an example of the present invention. These compositions were selected for comparison because from the data in Table II and Table V they showed comparable tack, peel strength and quick stick. The Brookfield viscosities were determined at various temperatures and are set forth in Table VI in pascal seconds (Pa.s).

TABLE VI

BROOKFIELD VISCOSITIES OF ADHESIVE COMPOSITIONS IN Pa.s

| Temperature in °C | 168 | 179 | 191 | 204 |
|---|---|---|---|---|
| Degrees Fahrenheit (°F) | (335) | (355) | (375) | (400) |
| Composition A | 26.1 | 17.0 | 12.0 | 7.0 |
| Composition B* | 26.1 | 24.5 | 15.5 | 10.7 |

*Comparative example, not an example of the present invention.

The data in Table VI clearly discloses that compositions in accordance with the present invention have lower viscosities at higher temperatures than the conventionally used resins.

Experiment 3.

A 0.11 cubic meter (30 gallon) nitrogen filled reactor was charged with 61.1 kilograms of alpha-methylstyrene, 6.55 kilograms of butadiene and 1.46 kilograms of styrene. An aliquot amount of the charge was withdrawn from the reactor. To this aliquot a small amount of tetrahydrofuran was added and a sec-butyllithium solution in cyclohexane was added until color appeared. Based on the titration the amount of impurities in the remaining feed which was 59.42 kilograms of alpha-methylstyrene, 6.37 kilograms of butadiene, and 1.42 kilograms of styrene was determined to be equivalent to 41.6 milliequivalents of sec-butyllithium. The content of the reactor was heated to 40 degrees centigrade and 163.8 millimoles of the above-described difunctional lithium initiator was added. Polymerization started shortly after the initiator addition and was completed in about two and one-half hours during which time the temperature of the reactor rose to a maximum of 87 degrees centigrade. The resultant product was a triblock copolymer having the ABA configuration in which block A was an alpha-methylstyrene and styrene copolymer and the B block was a polybutadiene. The product was soluble in the alpha-methylstyrene monomer used as solvent in the polymerization. A solution of 13.4 milliliters of isopropanol in 20 milliliters of toluene was added to terminate a majority of the active chain ends. The resultant solution was then maintained at 75 degrees centigrade for 30 minutes to insure all reactive chain ends were terminated. After the reaction mixture had cooled to room temperature, a small sample was withdrawn for analysis. To the remaining solution 1.384 kilograms of styrene and 6.94 kilograms of butadiene was added. The solution was heated to 46 degrees centigrade and a second addition of 152 millimoles of the difunctional initiator was added. The second polymerization lasted for about one and one-half hours and the product was similar to that of the first polymerization. The reaction was terminated by the addition of 51.2 milliliters of isopropanol. A hindered phenol stabilizer commercially available under the trade designation of Isonox® 129 from Schenectady Chemicals was added in a quantity of 42.2 grams and the reactor left undisturbed overnight. Additional stabilizers were added the following day before the product was recovered from the excess alpha-methylstyrene by drying in a heated vacuum oven. Final yield was 19.5 kilograms of ABA block copolymer containing 64.1 weight percent butadiene, 13.3 weight percent styrene and 22.6 weight percent alpha-methylstyrene. The molecular weight was determined to be 78,000 molecular weight units by gel permeation chromatography. The resultant ABA block copolymer was mixed with a hydrogenated hydrocarbon resin tackifier commercially available under the trade designation of Escorez® 5380 from Exxon Chemical Company and a stabilizer commercially available under the trade designation of IRGANOX® 1010. The materials were combined in a weight ratio of 60, 40 and 1 respectively.

For purposes of evaluation samples were prepared by the solution method as delineated in Experiment 1. The rolling ball tack value was 15 centimeters; the peel strength was 32.1 kilograms per meter (1.8 pounds per inch) and the quick stick as tested by test method PSTC—5 was 25.0 kilograms per meter (1.4 pounds per inch).

A second combination was prepared containing 50 parts by weight of the block copolymer prepared above and 40 parts by weight of Zonatac® 105 and 10 parts by weight Zonarez® A25. Evaluation indicating its tack was 16 centimeters, peel strength was 39.3 kilograms per meter (2.2 pounds per inch) and quick stick was 21.4 kilograms per meter (1.2 pounds per inch). Zonatac® and Zonarez® A25 are polyterpene tackifiers obtained from Arizona Chemical Company.

13

Experiment 4.

A one-liter glass reactor was nitrogen purged and charged with 400 milliliters of alpha-methylstyrene. A small amount of sec-butyllithium solution was added slowly until a faint straw color appeared. The reactor was then charged with 49 grams of isoprene and 3.8 grams of styrene. The reaction mixture was heated to 45°C and 0.45 millimole of the above-described difunctional initiator solution was added. The reaction mixture was heated to 50°C and maintained at or above 50°C for about two hours. During the two-hour period, the temperature had risen to a maximum of 95°C and the color had changed to a brownish orange. To terminate the reaction, 0.5 milliliter of acetic acid was added. The polymer was recovered from the excess alpha-methylstyrene by precipitating with methanol from the reaction mixture and again from a methylene chloride solution. The resultant polymer was an ABA triblock with polyisoprene as the center block and alpha-methylstyrene styrene copolymer as the end blocks. About 50 grams of product was obtained, having a composition of 81.2 weight percent isoprene, 12.5 weight percent alpha-methylstyrene and 6.3 weight percent styrene. The molecular weight as determined by gel permeation chromatography was 212,000.

A solution of 60 parts of the triblock copolymer with 40 parts by weight of Escorez® 1310 was dissolved in toluene and applied to polyester film for further evaluation. The peel strength was determined to be 50 kilograms per meter (2.8 pounds per inch), the rolling ball tack was 15 centimeters and quick stick was 28.6 kilograms per meter (1.6 pounds per inch).

Experiment 5.

The polymerization procedure of Experiment 4 was repeated with the exception that 1 milliliter of isoprene was added to the difunctional initiator solution and the initiator solution was then heated to 70 degrees centigrade for a period of 7 minutes before use. The reactor was fed only alpha-methylstyrene and isoprene. The required amount of styrene was added when the temperature of the reaction mixture rose to its maximum. The resulting triblock copolymer had the same composition as the copolymer of Experiment 4 except that the structure was less tapered. The molecular weight as determined by gel permeation chromatography was 196,000 molecular weight units. 60 parts of the resultant ABA copolymer were mixed with 40 parts by weight of Escorez® 1310 dissolved in toluene and applied to a polyester film for evaluation. The peel strength was determined to be 62.5 kilograms per meter (3.5 pounds per inch); the rolling ball tack was 9 centimeters; and the quick stick value was 37.5 kilograms per meter (2.1 pounds per inch).

Experiment 6.

The polymerization procedure of Experiment 4 was repeated with the following exceptions: 10.9 grams of butadiene was used, and 31.3 grams of isoprene. The initiator was .73 millimoles of the hereinbefore described difunctional initiator. The quantity of styrene used was 4.5 grams and was withheld from the feed until the polymerization temperature of the diene monomer reached its maximum value. The polymer recovered was an ABA triblock polymer with an isoprene/butadiene copolymer as the center block and an alpha-methylstyrene/styrene copolymer as the end blocks. The composition was 19.7 percent by weight butadiene, 56.6 percent by weight isoprene, 15.5 percent by weight alpha-methylstyrene and 8.2 percent by weight styrene. The molecular weight as determined by gel permeation chromatography was 123,000 molecular weight units.

Its value in a pressure sensitive adhesive formulation was determined by admixing 60 parts of the block copolymer with 40 parts of Escorez® 1310 in toluene and applying to polyester film, as in Experiment 1. The peel strength was 58.9 kilograms per meter (3.3 pounds per inch); the rolling ball tack just exceeded 26 centimeters and the quick stick value was 42.8 kilograms per meter (2.4 pounds per inch).

**Claims**

1. A pressure-sensitive adhesive composition comprising a block copolymer of ABA configuration wherein the A block is derived from a monoalkenyl aromatic hydrocarbon, and the B block is derived from a conjugated diene and a tackifying resin, characterized by

(a) a block copolymer of ABA configuration wherein the A block is a copolymer of alpha-methylstyrene and styrene and the alpha-methylstyrene to styrene weight ratio is from 2:98 to 98:2 and the B block of the polymer is a diene polymer and the weight ratio of the A block to the B block in the ABA block copolymer is from 10:90 to 45:55; and

(b) a tackifying resin compatible with block B, in the amount of 10 to 200 parts per hundred parts of the ABA block copolymer.

2. The composition of claim 1 wherein the weight ratio of alpha-methylstyrene to styrene is from 1.1:1 to 2.5:1.

3. The composition of claim 1 wherein the B block is polyisoprene, polybutadiene or a copolymer of butadiene and isoprene.

4. The composition of claim 1 wherein the weight ratio of the A block to the B block in the ABA block copolymer is from 15:85 to 30:70.

5. The composition of claim 1 wherein the tackifying resin is a rosin ester resin, polyterpene,

EP 0 181 380 B1

polydipentene, polypinene, dehydrogenated resin, glycerol ester of hydrogenated rosin, or pentaerythritol ester of hydrogenated rosin.

6. The composition of claim 1 comprising a diblock copolymer of AB type in an amount up to 50 parts by weight per hundred parts of the AB triblock copolymer.

7. The composition of claim 1 comprising an extending oil in an amount up to 50 parts by weight per hundred parts by weight of the ABA block copolymer.

8. The composition of claim 1 comprising a stabilizer in the amount up to 5 parts per hundred parts by weight of the ABA block copolymer.

9. The composition of claim 1 comprising a reinforcing resin having a higher softening point than the block A in the ABA polymer, in the amount of from 2 to 100 parts per hundred parts of the ABA block copolymer.

## Patentansprüche

1. Druckempfindliche Klebstoffzusammensetzung enthaltend ein Blockcopolymer der ABA Konfiguration, in dem der A-Block von einem monoalkenylaromatischen Kohlenwasserstoff abgeleitet ist und der B-Block von einem konjugierten Dien abgeleitet ist, und ein klebrigmachendes Harz, gekennzeichnet durch

(a) ein Blockcopolymer der ABA Konfiguration, in dem der A-Block ein Copolymer aus alpha-Methylstyrol und Styrol ist und das Gewichtsverhältnis von alpha-Methylstyrol:Styrol von 2:98 bis 98:2 beträgt und der B-Block des Polymeren ein Dien-polymer ist und das Gewichtsverhältnis von A-Block:B-Block im ABA Blockcopolymeren von 10:90 bis 45:55 beträgt, und

(b) ein klebrigmachendes Harz, das mit Block B verträglich ist, in Mengen von 10 bis 200 Gewichtsteilen pro 100 Teile des ABA Blockcopolymeren.

2. Zusammensetzung nach Anspruch 1, dadurch gekennzeichnet, daß das Gewichtsverhältnis von alpha-Methylstyrol:Styrol von 1,1:1 bis 2,5:1 beträgt.

3. Zusammensetzung nach Anspruch 1, dadurch gekennzeichnet, daß der B-Block Polyisopren, Polybutadien oder ein Copolymer von Butadien und Isopren ist.

4. Zusammensetzung nach Anspruch 1, dadurch gekennzeichnet, daß das Gewichtsverhältnis des A-Blockes:B-Block in dem ABA Blockcopolymeren von 15:85 bis 30:70 beträgt.

5. Zusammensetzung nach Anspruch 1, dadurch gekennzeichnet, daß das klebrigmachende Harz ein Kolophoniumharzester, Polyterpen, Polydipenten, Polypinen, dehydriertes Harz, Glycerinester hydrierten Kolophoniumharzes oder Pentaerythritester von hydriertem Kolophoniumharz ist.

6. Zusammensetzung nach Anspruch 1, dadurch gekennzeichnet, daß sie ein Diblockcopolymer des AB Types in einer Menge von bis zu 50 Gewichtsteilen pro 100 Teile des ABA Triblockcopolymeren enthält.

7. Zusammensetzung nach Anspruch 1, dadurch gekennzeichnet, daß sie ein Strecköl in einer Menge bis zu 50 Gewichtsteilen pro 100 Gewichtsteile des ABA Blockcopolymeren enthält.

8. Zusammensetzung nach Anspruch 1, dadurch gekennzeichnet, daß sie einen Stabilisator in einer Menge bis zu 5 Teilen pro 100 Gewichtsteile des ABA Blockcopolymeren enthält.

9. Zusammensetzung nach Anspruch 1, dadurch gekennzeichnet, daß sie ein verstärkendes Harz mit einem höheren Erweichungspunkt als der des Blockes A in dem ABA Polymeren enthält in einer Menge von 2 bis 100 Teilen pro 100 Teile des ABA Blockcopolymeren.

## Revendications

1. Composition adhésive sensible à la pression comprenant un copolymère séquencé de configuration ABA dans lequel la séquence A est dérivée d'un hydrocarbure aromatique mono-alcénylique et la séquence B est dérivée d'un diène conjugué, et une résine d'adhésivité, caractérisée par,

a) un copolymère séquencé de configuration ABA dans lequel la séquence A est un copolymère d'alpha-méthylstyrène et de styrène et le rapport pondéral de l'alpha-méthylstyrène au styrène est de 2:98 à 98:2 et la séquence B du polymère est un polymère de diène, le rapport pondéral de la séquence A à la séquence B dans le copolymère séquencé ABA étant de 10:90 à 45:55, et

b) une résine d'adhésivité compatible avec la séquence B, en une proportion de 10 à 200 parties par 100 parties du copolymère séquencé ABA.

2. Composition selon la revendication 1, dans laquelle le rapport pondéral de l'alpha-méthylstyrène au styrène est de 1,1:1 à 2,5:1.

3. Composition selon la revendication 1, dans laquelle la séquence B est un polyisoprène, un polybutadiène ou un un copolymère butadiène/isoprène.

4. Composition selon la revendication 1, dans laquelle le rapport pondéral de la séquence A à la séquence B dans le copolymère séquencé ABA est de 15:85 à 30:70.

5. Composition selon la revendication 1, dans laquelle la résine d'adhésivité est une résine d'ester de colophane, un polyterpène, un polydipentène, un polypinène, une résine déshydrogénée, un ester de glycérol de colophane hydrogénée ou un ester de pentaérythritol de colophane hydrogénée.

6. Composition selon la revendication 1, comprenant un copolymère diséquencé du type AB en une proportion allant jusqu'à 50 parties en poids par 100 parties du copolymère triséquencé ABA.

7. Composition selon la revendication 1, comprenant une huile diluant en une proportion allant jusqu'à 50 parties en poids par 100 parties en poids de copolymère séquencé ABA.

8. Composition selon la revendication 1, comprenant un stabilisant en une proportion pouvant aller jusqu'à 5 parties par 100 parties en poids du copolymère séquencé ABA.

9. Composition selon la revendication 1, qui comprend une résine de renforcement ayant un point de ramollissement plus élevé que la séquencé A dans le polymère ABA, en une proportion de 2 à 100 parties par 100 parties du copolymère séquencé ABA.